# EUROPEAN PATENT SPECIFICATION

(11) **EP 1 502 187 B1**
(45) Date of publication and mention of the grant of the patent: **14.11.2007**
(21) Application number: 03720704.0
(22) Date of filing: 16.04.2003
(51) Int. Cl.: G06F 9/48, G06F 9/50, G06F 9/46

(54) **REDUCED OVERHEAD CONTEXT-SAVING IN STATIC PRIORITY SCHEDULED OPERATING SYSTEMS**
WENIGER AUFWENDIGE KONTEXTUMSCHALTUNG IN MIT STATISCHEN PRIORITÄTEN GESTEUERTEN BETRIEBSSYSTEMEN
AMELIORATIONS SE RAPPORTANT A UNE SAUVEGARDE DEPENDANTE DU CONTEXTE A SURDEBIT REDUIT DANS DES SYSTEMES D'EXPLOITATION STATIQUES AVEC CALENDRIER DES PRIORITES

(30) Priority: 25.04.2002 GB 0209479; 14.05.2002 US 146654
(43) Date of publication of application: 02.02.2005
(60) Divisional application: 06026733.3
(73) Proprietor: Livedevices Limited, York Y010 5DG (GB)
(72) Inventor: LAKE, David, Malton North Yorkshire YO17 9TG (GB); TUFFEN, John, York North Yorkshire YO30 6LE (GB)
(74) Representative: Harrison Goddard Foote
(86) International application number: PCT/GB2003/001609
(87) International publication number: WO 2003/091878

(56) References cited:
- US-A- 5 799 188
- US-A- 6 052 707
- CLEMENT B J ET AL: "Scheduling high-level tasks among cooperative agents" MULTI AGENT SYSTEMS, 1998. PROCEEDINGS. INTERNATIONAL CONFERENCE ON PARIS, FRANCE 3-7 JULY 1998, LOS ALAMITOS, CA, USA,IEEE COMPUT. SOC, US, 3 July 1998 (1998-07-03), pages 96-103, XP010642178 ISBN: 0-8186-8500-X
- PATENT ABSTRACTS OF JAPAN vol. 0175, no. 02 (P-1610), 9 September 1993 (1993-09-09) & JP 5 127926 A (NEC CORP), 25 May 1993 (1993-05-25)
- SAKSENA M ET AL: "Scalable real-time system design using preemption thresholds" PROCEEDINGS 21ST IEEE REAL-TIME SYSTEMS SYMPOSIUM IEEE PISCATAWAY, NJ, USA, 2000, pages 25-34, XP002294585 ISBN: 0-7695-0900-2
- R. DAVIS, N. MERRIAM, N. TRACEY: "How Embedded Applications using an RTOS can stay with On-chip Memory Limits" PROCEEDINGS OF THE WORK IN PROGRESS AND INDUSTRIAL EXPERIENCE SESSION, EUROMICRO CONFERENCE ON REAL-TIME SYSTEMS, June 2000 (2000-06), pages 1-8, XP002294586

## Description

The present invention relates to methods and systems for reducing memory and processor usage in operating systems that make use of static priority-based scheduling, specifically, in reducing the need for resource saving on inter-task context switches. Embodiments of the present invention are of particular relevance to the technical field of embedded devices and the control thereof, since these generally use static priority-based scheduling given the limited range of functions required. Embodiments of the present invention may be used in conjunction with an invention disclosed in the present applicant's copending UK patent application no 0209800.2 of 30^{th} April 2002, a copy of which is being filed with the present application.

In an operating system that is based around static priority based scheduling (systems in which the priority ordering of tasks is determined offline and remains constant) there exists some external description of the tasking structure of the system that is used to generate data structures describing the tasks and their priorities. These data structures are most advantageously calculated offline by a "configuration tool" or other program and used to initialise the system when it starts up. Tasks in such an operating system may be activated at any time, but do not start to run until they are the highest-priority runnable task in the system. They continue to run (though they may be pre-empted by other higher-priority tasks at which point a context-switch takes place) until their work is done and then terminate.

Applications built using such operating systems typically consist of a plurality of concurrent tasks each set at a predetermined priority. Embodiments of the present invention relate to reducing the amount of context that needs to be saved when making a context switch between any two tasks.

The present invention is described in terms of its application to an operating system with single-stack, single-shot, run-to-completion task semantics though is generally applicable to other forms of tasking model.

Consider a system that makes use of any software or hardware resource which must "appear" to each task to be under its exclusive control (for example, a non-reentrant software floating point implementation; a set of hardware floating-point registers; or a set of digital signal processor accumulators). We refer to the collection of data that must be loaded and saved in order to give each task its own view of such resources as a "resource context", since this is additional to the normal task context.

In a conventional system, these resources would be saved on entry to any task and restored when the task exits. This means that for any system there would be an additional memory usage of one "resource context" per task in the system.

Clement, B. J. et al.; "Scheduling high-level tasks among cooperative agents"; Multi-Agent Systems; 1998; Proc. Int. Conf. Paris; 3-7 July 1998; IEEE Comp. Soc.; 3 July 1998; pp 96-103 discloses a method of grouping or clustering tasks so as to reduce resource contexts upon switching.

Saksena, M. et al.; "Scalable Real-Time System Design Using Preemption Thresholds"; Proc. 21st IEEE Real-Time Systems Symposium; IEEE Piscataway; 2000; pp 25-34 discloses the integration of timing analysis results with results from an operating system configuration tool.

US 6,052,707 discloses pre-emptive multi-tasking with cooperative groups of tasks.

According to a first aspect of the present invention, there is provided a method of reducing memory or processor usage in an operating system that uses static priority-based scheduling for tasks as claimed in claim 1 Other aspects of embodiments of the invention are described below and claimed in the remaining claims.

The software product may be in any appropriate form or language, and may be stored on a data carrier such as a floppy disk, optical disk, flash memory device or any other type of data carrier.

We shall first discuss the meaning of "wrapper" and "dispatcher" as used subsequently in the present application before discussing potential implementations of embodiments of the invention.

A "wrapper" in this application is defined to be a fragment of program code that encapsulates a task and is called in its place by the underlying operating system - for example, if we consider a task "task_1" whose "entry" (the function that carries out useful work) is defined as follows:

```
 void task_1_entry(void)
 {
    /* do lots of useful work */
 }
```

we may under some circumstances (for example if loading or saving of context is required) wish to replace it with a wrapper:

```
 void task_1_entry_wrapper (void)
 {
     do_stuff_that_must_be_done_before_calling task()
     task_1_entry();
     do_stuff_that_must_be_done_after_running_task();
 }
```

A "dispatcher" performs essentially the same activities, but rather than the task entry function being replaced, the operating system itself is modified to make the pre- and post-task calls. For example, we might find the following code inside the operating system:

```
 void os_dispatcher(void)
 {
    task *t = os_find_highest_priority_runnable_task();
    if (t->priority > os_current_task->priority) {
        do_stuff_that_must_be_done_before_calling_task();
        t->entry();
        do_stuff_that_must_be_done_before_calling_task();
    }
 }
```

The description of this invention concentrates on the use of wrappers although an approach similar to this but using modified forms of the operating system dispatch function is also possible.

Let us consider an example of an unoptimised configuration of a system that uses task wrappers. Let us assume that a system is declared as follows (where higher numbers imply higher priority):
task a priority 1;
task b priority 2;
task c priority 3;
task d priority 4;
task e priority 5;

Trivially, this system would require five "resource contexts" - one for each of tasks a, b, c, d and e to save their resources into when they are pre-empted by higher priority tasks. Each task would be protected by a "wrapper" that ensures that the "resource context" would be saved into the appropriate buffer and the operating system dispatcher would call this instead of the task entry function - for example, instead of jumping directly to "task_d_entry", the system dispatcher would call a wrapper:

```
  resource_context rc;

  void task_d_entry_wrapper(void) /* Generated by
  config tool */
  {
     save_context(&rc);        /* save context */
     task_d_entry();           /* call entry */
     restore_context(&rc);     /* restore context */
  }
```

(in this case we show the wrapper being generated in a C-like language and including the declaration of the "resource context" itself - though this could also be generated in assembly language with appropriate code and data declarations, or could be brought about by calling different variants or branches of the operating system dispatcher function).

The system dispatcher in this case could use a table of function pointers to decide which function to call for each task. In a hypothetical assembly language, this might appear as below:
task_entry_tab: PUBLIC
   - pointer task_a_entry_wrapper
   - pointer task_b_entry_wrapper
   - pointer task_c_entry_wrapper
   - pointer task_d_entry_wrapper
   - pointer task_e_entry_wrapper

But let us assume that only three of the tasks make use of resources that must be saved and restored - the system description is modified to:
task a priority 1 uses fp;
task b priority 2 uses fp;
task c priority 3;
task d priority 4 uses fp;
task e priority 5;

In this system, the "uses fp" declaration is added to indicate that a task uses the floating-point coprocessor. If a task does not explicitly mention that it uses something that requires a "resource context", then one is not provided (and no wrapper is needed - the OS can call the task's entry function directly).

A logical implication of the above is that the lowest-priority task that uses a shared resource need not provide a wrapper to load or save that context - since the pre-empter saves the context rather than the pre-emptee. The ultimate extension of this is that any system in which only one task uses a shared resource needs no wrapper or storage as there is nothing else that uses the resource to pre-empt it.

This means that only two resource contexts and wrappers need be generated (for task b and task d). In this case the dispatch table might look like this:
task_entry_tab: PUBLIC
   .pointer task_a_entry # no need for wrapper - preemptor saves
   .pointer task_b_entry_wrapper # needs wrapper, can pre-empt a
   . pointer task_c_entry # no need for wrapper- no FP
   .pointer task_d_entry_wrapper # needs wrapper, can pre-empt b
   .pointer task_e_entry # no need for a wrapper

A further optimisation can be made to this. Suppose we have a mechanism for declaring that two tasks execute in mutual exclusion to each other (i.e. for a pair of tasks x and y, even though x is of higher priority than y, x can never pre-empt y).

Consider this system description that places tasks a and b in mutual exclusion:
task a priority 1 uses fp;
task b priority 2 uses fp;
task c priority 3;
task d priority 4 uses fp;
task e priority 5;
mutex a, b;

Given that tasks a and b are in mutual exclusion, we can therefore remove another resource context and wrapper - only task d needs to save and restore the "resource context" since it is the only higher-priority task that may affect the state of the shared resources, so in this case only task d would be generated with a wrapper and a "resource context".

It is to be noted that when tasks or the like share the same priority, they can be treated in the same way as if they are in mutual exclusion.

Consider also this variant:
task a priority 1 uses fp;
task b priority 2;
task c priority 3 uses fp;
task d priority 4 uses fp;
task e priority 5;
mutex c, d;

In this system, it is clear that both tasks c and d need a wrapper to save the context, but since they are in mutual exclusion they can share the same resource context. The wrappers might be of the form:

```
    resource_context rc_c_and_d;

    void task _c_entry_wrapper(void)                     /* Generated by
    config tool */
    {
       save_context(&rc_c_and_d);                       /* save context*/
       task_c_entry();                                  /* call entry */
       restore context(&rc_c_and_d);                    /* restore
    context */
    }

    void task_d_entry_wrapper(void)                     /* Generated by
    config tool */
    {
       save_context(&rc_c_and_d);                       /* save context*/
       task_d_entry();                                  /* call entry */
       restore_context (&rc_c_and_d);                   /* restore
    context */
    }
```

Although we discuss only tasks in this description, this scheme is uniformly extensible to Interrupt Service Routines provided that we can determine interrupt priority ordering - so any ISR that uses a particular resource would need to save and restore that resource if it could be interrupted by another higher-priority interrupt. (Interrupts at the same priority but at a different arbitration order would be considered to be in a mutual exclusion group).

An algorithm that could be used by an offline configuration tool for determining resource contexts and wrappers might be as follows:

```
 global list of task Tasks;
 global list of mutex Mutexes;

 -- Preconditions: Mutexes is a list of all mutexes in the system
 -- Tasks is a list of tasks sorted into priority order.

 procedure Generate_Contexts is
  list of context Resource_Contexts = nil;
  list of wrapper Wrappers = nil;

  -- Phase 1. Generate unique wrapper and context for every task
  -- that locks the resource. Point the context at the wrapper.
  for t in Tasks do
     if uses_shared_resource (t) then
       wrapper w = new Wrapper(t); append(w, Wrappers);
       context c = new Context(t); append (c, Contexts);
       wrapper_set_context(c,w);
     end if;
  end for;

  -- Phase 2. Merge all contexts that can be merged, and
  -- amend the wrappers to point to these merged contexts.
  -- Delete any contexts that we don't use any more.

  for t in Tasks do
     for u in Tasks do
       -- merge if t & u wrapped but exist in a mutex
       if t <> u and exists_wrapper(Wrappers, t)
                   and exists_wrapper(Wrappers, u)
                   and exists_mutex(t,u) then
          -- get the wrappers for the tasks.
         w = get_wrapper(Wrappers, t);
         x = get_wrapper(Wrappers, u);
         -- get the contexts for the tasks.
         c1 = get_context(t);
         c2 = get_context(u);
         -- make a new context that combines both existing ones.
         c3 = new Context (merge_context (c1, c2));
         append(c3, Contexts);
         -- get rid of the old contexts.
         delete_context(Contexts, c1);
         delete_context(Contexts, c2);
         -- point the wrappers at the new context.
         wrapper_set_context(w, c3);
         wrapper_set_context(x, c3);
      end if;
    end for;
  end for;

  -- phase 3. The lowest-priority task using the resource
  -- AND ANYTHING IN A MUTEX WITH IT
  -- (which means anything sharing the same context) will NOT need
  -- a wrapper or a context.
 w = head Wrappers;
  first_wrapped_task = get_task(w);
  c = get_context(first_wrapped_task);
  for t in tasks do
    w = get_wrapper(t);
    if get_context(t) = c then
      delete_wrapper(Wrappers, w);
    end if;
  end for;
  delete_context (Contexts, c);
 end procedure;
```

It will be appreciated that this algorithm is merely an example of a way to determine resource contexts; embodiments of the present invention may use this algorithm or any other appropriate algorithm or method that achieves the same or a similar effect.

A simple extension of this approach would allow each device to use multiple shared resources, with optimal wrappers being generated for each task based on the resource(s) it uses - for example consider the following system which has floating point registers and a digital signal processor (DSP) unit:
task a priority 1 uses fp;
task b priority 2 uses dsp, fp:
task c priority 3 uses fp;
task d priority 4 uses dsp;
task e priority 5 uses dsp, fp;
task f priority 6 uses fp;

In this system:
Task a needs no wrapper (since the pre-empter saves the resources)
Task b needs a wrapper that saves only the "fp" context (it is the lowest priority task that uses the "dsp" context, so does not need to save it)
Task c needs a wrapper that saves only the "fp" context
Task d needs a wrapper that saves only the "dsp" context (it is the first pre-empting task to use it)
Task e needs a wrapper that saves both contexts
Task f needs a wrapper that saves only the "fp" context.

Such wrappers can be automatically generated from code skeletons provided by the user of the configuration tool.

The method of the first aspect may further comprise integrating results from a timing analysis tool with an operating system configuration tool in such a way that when it is shown by the timing analysis tool that a particular task never pre-empts another task or tasks with which it contends for a resource, only a single resource context is generated, the single resource context being shared by the tasks.

The computing device of the second aspect may further comprise a timing analysis tool adapted to integrate timing analysis results with results from an operating system configuration tool in such a way that when it is shown by the timing analysis tool that a particular task never pre-empts another task with which it contends for a resource, only a single resource context is generated, the single resource context being shared by the tasks.

The software product of the third aspect may be adapted to integrate results from a timing analysis tool with an operating system configuration tool in such a way that when it is shown by the timing analysis tool that a particular task never pre-empts another task with which it contends for a resource, only a single resource context is generated, the single resource context being shared by the tasks.

In other words, the results of a timing analysis, which may be heuristic in nature, can be used in place of or in addition to results from a formal schedulability analysis so as to designate tasks as being effectively in mutual exclusion. In this way, duplication of resource contexts and/or wrappers is avoided.

It is to be noted that a timing analysis may be obtained by way of a timing analysis tool that applies techniques such as Rate Monotonic Analysis and extensions thereof in order to determine, among other things, when a given task might be executing, the latest time at which the given task might complete, and which other tasks can possibly pre-empt the given task.

Take for example the following simple periodic system:
task t1 priority 1 every 20 ticks duration 5 ticks offset 0 ticks uses fp;
task t2 priority 2 every 20 ticks duration 5 ticks offset 2 ticks uses fp;

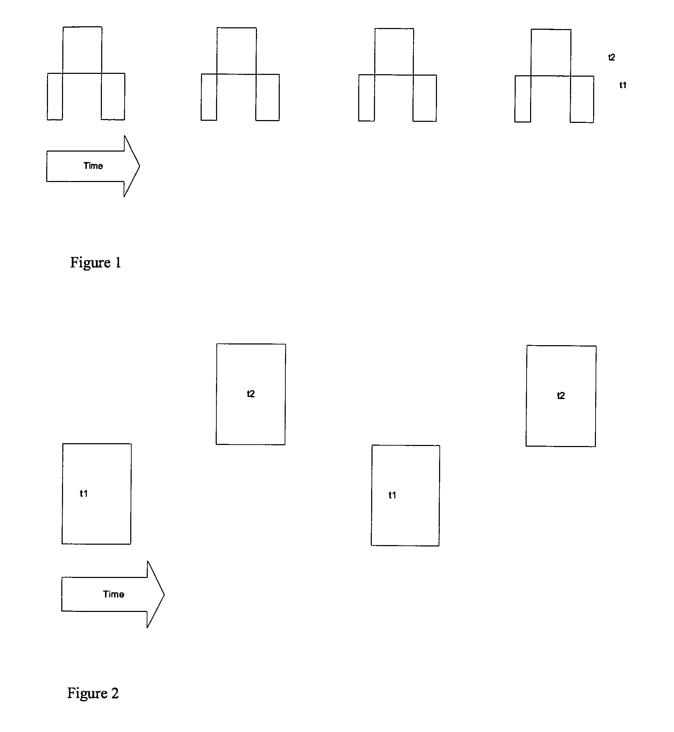

The execution profile of this system is shown in Figure 1 of the accompanying drawings. In this system, task t2 will always pre-empt task t1 two "ticks" into its run, the system returning to task t1 after t2 has finished running after five "ticks". Since both tasks share use of the floating point registers, task t2 must therefore load and save their context.

Consider, though, the following system:
task t1 priority 1 every 20 ticks duration 5 ticks offset 0 ticks uses fp;
task t2 priority 2 every 20 ticks duration 5 ticks offset 10 ticks uses fp;

The execution profile of this system is shown in Figure 2 of the accompanying drawings. In this system, task t2 never pre-empts task t1 - it is therefore legitimate for a timing analysis tool to infer that the tasks can execute in mutual exclusion and by automatically adding the declaration
mutex t1, t2;
to the system declaration this can inhibit the generation of wrappers and context-save information for these two tasks.

The approach is extensible to any form of analysis that can demonstrate that for any pair of tasks x, y, there exists no condition in which the tasks can pre-empt each other.

For example, a published prior art paper entitled: "How embedded applications using an RTOS can stay within on-chip memory limits" [Robert Davis, Nick Merriam, and Nigel Tracey; Proceedings of the Work in Progress and Industrial Experience Session, Euromicro Conference on Real-Time Systems, June 2000.] shows how schedulability analysis can be used to collect tasks into mutexes while ensuring that all task deadlines are met. It is simple to extend these techniques so that mutex creation minimises the combination of stack size and context save areas by grouping into mutexes those tasks which would otherwise require separate context save areas.

The preferred features of the invention are applicable to all aspects of the invention and may be used in any possible combination.

Throughout the description and claims of this specification, the words "comprise" and "contain" and variations of the words, for example "comprising" and "comprises", mean "including but not limited to", and are not intended to (and do not) exclude other components, integers, moieties, additives or steps.

## Claims

1. A method of reducing memory or processor usage in an operating system that uses static priority pre-emptive scheduling comprising a plurality of priorities associated with a plurality of tasks each task having a respective resource context, said priorities having been determined off-line, **characterized in that** for a particular resource, data for corresponding resource contexts required by the operating system when executing the tasks is determined by determining which of the tasks require resource contexts to be saved and restored for use of the particular resource; wherein wrappers or dispatchers are provided only for tasks that must save and restore such resource contexts; and **in that** said step of determining is dependent upon one or more of:
a. identifying one of the tasks having a lowest priority for the particular resource and concluding that any such identified task is not a task needing a corresponding wrapper or dispatcher to save and restore a resource context; and
b. identifying one of the tasks whose use of the particular resource is mutually exclusive of uses of the resource by another task; said identifying comprising identifying at least a pair of tasks of the plurality of tasks that are mutually exclusively operable and concluding that at least said pair of tasks is operable using shared code to save and restore a resource context.

2. The method as claimed in claim 1 in which the steps of identifying one of the tasks of the plurality of tasks having a lowest priority and concluding that any such identified task is not a task needing a corresponding wrapper or dispatcher to save and restore a resource context comprise the steps of identifying a task of the plurality of tasks having a lowest respective priority in relation to at least a first shared resource and concluding that the identified task is not a task needing a wrapper or dispatcher to save and restore a resource context in relation to the at least first shared resource.

3. The method as claimed in claim 1 in which the step of identifying at least a pair of tasks of the plurality of tasks that are mutually exclusively operable and concluding that at least said pair of tasks are operable using said shared code to save and restore a resource context comprise the steps of identifying at least a pair of tasks of the plurality of tasks that are mutually exclusively operable in relation to a shared resource and concluding that at least said pair of tasks is operable using said shared code to save and restore a resource context in relation to that shared resource.

4. The method as claimed in either of claims 1 and 3 in which the step of identifying at least said pair of tasks of the plurality of tasks that are mutually exclusively operable, in relation to a shared resource or otherwise, comprises the step of determining those tasks of the plurality of tasks that will never run together; said determining using a timing analysis or a schedulability analysis of the operating system.

5. The method of any of claims 1 to 4 comprising the step of defining a single resource context declaration to be used by the at least a pair of mutually exclusively operable tasks.

6. The method of any preceding claim in which the tasks are interrupt service routines.

7. The method as claimed in any preceding claim in which the steps of identifying comprise the steps of assigning wrappers or dispatchers for saving and restoring a resource context of the respective resource contexts for all tasks of the plurality of tasks, merging redundant contexts and removing redundant wrappers or dispatchers for saving and restoring a resource context of the respective resource contexts.

8. A system comprising means to implement a method as claimed in any preceding claim.

9. A computer program comprising code arranged, when executed, to implement a method or system as claimed in any preceding claim.

10. Computer readable storage storing a computer program as claimed in any preceding claim.

11. A computing device comprising a memory, a processor and an operating system that uses static priority pre-emptive scheduling of a plurality of tasks; each task having a respective resource context and a respective execution priority; the computing device storing, and being adapted to execute, wrappers or dispatchers for saving and restoring a resource context of the respective resource contexts only for those tasks that are capable of pre-empting another task or code produced according to a method as claimed in any of claims 1 to 7.

## Patentansprüche

1. Verfahren zum Verringern der Speicher- oder Prozessorbenutzung in einem Betriebssystem, das präemptive Zeitablaufsteuerung mit statischer Priorität verwendet, wobei die Zeitablaufsteuerung eine Vielzahl von Prioritäten aufweist, die einer Vielzahl von Tasks zugeordnet sind, von den jeder einen jeweiligen Ressourcenkontext hat, und wobei die Prioritäten offline festgelegt worden sind, **dadurch gekennzeichnet, dass** für eine bestimmte Ressource Daten für entsprechende Ressourcenkontexte, die von dem Betriebssystem beim Ausführen der Tasks benötigt werden, bestimmt werden, indem bestimmt wird, welche der Tasks erfordern, dass Ressourcenkontexte zur Verwendung der bestimmten Ressource gespeichert und wiederhergestellt werden, wobei Hüllen oder Dispatcher nur für Tasks vorgesehen werden, die solche Ressourcenkontexte speichern und wiederherstellen müssen, und **dadurch**, dass der Schritt des Bestimmens von einem oder mehreren von dem Folgenden abhängt:
a. Identifizieren von einem der Tasks mit einer niedrigsten Priorität für die bestimmte Ressource und Schließen, dass jeder derartige identifizierte Task nicht ein Task ist, der eine entsprechende Hülle oder einen entsprechenden Dispatcher benötigt, um einen Ressourcenkontext zu speichern und wiederherzustellen, und
b. Identifizieren von einem der Tasks, dessen Verwendung der bestimmen Ressource sich mit Verwendungen der Ressource durch einen anderen Task gegenseitig ausschließt, wobei das Identifizieren das Identifizieren von zumindest einem Paar von Tasks der Vielzahl von Tasks umfasst, die einander gegenseitig ausschließend betrieben werden können, und Schließen, das zumindest das Paar von Tasks unter Verwendung gemeinsam genutzten Codes betrieben werden kann, um einen Ressourcenkontext zu speichern und wiederherzustellen.

2. Verfahren nach Anspruch 1, bei dem die Schritte des Identifizierens von einem der Tasks der Vielzahl von Tasks mit einer niedrigsten Priorität und des Schließens, dass jeder derartige identifizierte Task nicht ein Task ist, der eine entsprechende Hülle oder einen entsprechenden Dispatcher benötigt, um einen Ressourcenkontext zu speichern und wiederherzustellen, die Schritte aufweisen, einen Task der Vielzahl von Tasks mit einer niedrigsten jeweiligen Priorität in Bezug auf zumindest eine erste gemeinsam genutzte Ressource zu identifizieren und zu schließen, dass der identifizierte Task nicht ein Task ist, der eine Hülle oder einen Dispatcher benötigt, um einen Ressourcenkontext in Bezug auf die zumindest erste gemeinsam genutzte Ressource zu speichern und wiederherzustellen.

3. Verfahren nach Anspruch 1, bei dem der Schritt des Identifizierens von zumindest einem Paar von Tasks der Vielzahl von Tasks, die sich gegenseitig ausschließend betrieben werden können, und des Schließens, dass zumindest das Paar von Tasks unter Verwendung des gemeinsam genutzten Codes betrieben werden kann, um einen Ressourcenkontext zu speichern und wiederherzustellen, die Schritte aufweist, zumindest ein Paar von Tasks der Vielzahl von Tasks zu identifizieren, die in Bezug auf eine gemeinsam genutzte Ressource einander gegenseitig ausschließend betrieben werden können, und zu schließen, dass zumindest das Paar von Tasks unter Verwendung des gemeinsam genutzten Codes betrieben werden kann, um einen Ressourcenkontext in Bezug auf die gemeinsam genutzte Ressource zu speichern und wiederherzustellen.

4. Verfahren nach einem der Ansprüche 1 und 3, bei dem der Schritt des Identifizierens von zumindest dem Paar von Tasks der Vielzahl von Tasks, die in Bezug auf eine gemeinsam genutzte Ressource oder anderweitig einander gegenseitig ausschließend betrieben werden können, den Schritt aufweist, diejenigen Tasks der Vielzahl von Tasks zu bestimmen, die niemals zusammen laufen werden, wobei das Bestimmen eine Zeitfolgeanalyse oder eine Zeitablaufsteuerbarkeitsanalyse des Betriebssystems verwendet.

5. Verfahren nach einem der Ansprüche 1 bis 4, das den Schritt aufweist, eine einzelne Ressourcenkontextdeklaration zur Verwendung durch das zumindest eine Paar einander gegenseitig ausschließend betreibbarer Tasks zu definieren.

6. Verfahren nach einem der vorhergehenden Ansprüche, bei dem die Tasks Unterbrechungsdienstroutinen sind.

7. Verfahren nach einem der vorhergehenden Ansprüche, bei dem die Schritte des Identifizierens die Schritte aufweisen, Hüllen oder Dispatcher zum Speichern und Wiederherstellen eines Ressourcenkontexts der jeweiligen Ressourcenkontexte für alle Tasks der Vielzahl von Tasks zuzuweisen, redundante Kontexte zusammenzuführen und redundante Hüllen oder Dispatcher zum Speichern und Wiederherstellen eines Ressourcenkontexts der jeweiligen Ressourcenkontexte zu entfernen.

8. System mit einem Mittel zum Implementieren eines Verfahrens nach einem der vorhergehenden Ansprüche.

9. Computerprogramm mit Code, der ausgestaltet ist, um bei der Ausführung ein Verfahren oder System nach einem der vorhergehenden Ansprüche zu implementieren.

10. Computerlesbarer Speicher, der ein Computerprogramm nach einem der vorhergehenden Ansprüche speichert.

11. Rechenvorrichtung, die einen Speicher, einen Prozessor und ein Betriebssystem aufweist, das präemptive Zeitablaufsteuerung mit statischer Priorität einer Vielzahl von Tasks verwendet, wobei jeder Task einen jeweiligen Ressourcenkontext und eine jeweilige Ausführungspriorität hat, wobei die Rechenvorrichtung gemäß einem Verfahren nach einem der Ansprüche 1 bis 7 erzeugte Hüllen oder Dispatcher speichert, die vorgesehen sind, um einen Ressourcenkontext der jeweiligen Ressourcenkontexte nur für diejenigen Tasks zu speichern und wiederherzustellen, die dazu in der Lage sind, einen anderen Task oder Code zu blockieren, und wobei die Rechenvorrichtung angepasst ist, um diese Hüllen oder Dispatcher auszuführen.

## Revendications

1. Procédé de réduction d'usage de mémoire ou de processeur dans un système d'exploitation qui utilise un ordonnancement préemptif à priorité statique comprenant une pluralité de priorités associées à une pluralité de tâches, chaque tâche ayant un contexte de ressource respectif, lesdites priorités ayant été déterminées hors connexion, **caractérisé par le fait que**, pour une ressource particulière, on détermine des données pour des contextes de ressources correspondants requis par le système d'exploitation lors de l'exécution des tâches, en déterminant lesquelles des tâches requièrent des contextes de ressources devant être sauvegardés et restaurés pour une utilisation de la ressource particulière ; dans lequel des enveloppeurs ou des aiguilleurs sont prévus seulement pour des tâches qui doivent sauvegarder et restaurer de tels contextes de ressources ; et **par le fait que** ladite étape de détermination est dépendante d'un ou de plusieurs de :
a. l'identification de l'une des tâches ayant une priorité la plus basse pour la ressource particulière et la conclusion que toute telle tâche identifiée n'est pas une tâche nécessitant un enveloppeur ou un aiguilleur correspondant pour sauvegarder et restaurer un contexte de ressource ; et
b. l'identification de l'une des tâches dont l'utilisation de la ressource particulière est mutuellement exclusive d'utilisations de la ressource par une autre tâche, ladite identification comprenant l'identification d'au moins une paire de tâches de la pluralité de tâches qui sont utilisables de façon mutuellement exclusive et la conclusion qu'au moins ladite paire de tâches est utilisable à l'aide d'un code partagé pour sauvegarder et restaurer un contexte de ressource.

2. Procédé selon la revendication 1, dans lequel les étapes d'identification de l'une des tâches de la pluralité de tâches ayant une priorité la plus basse et de conclusion que toute telle tâche identifiée n'est pas une tâche nécessitant un enveloppeur ou un aiguilleur correspondant pour sauvegarder et restaurer un contexte de ressource comprennent les étapes d'identification d'une tâche de la pluralité de tâches ayant une priorité respective la plus basse par rapport à au moins une première ressource partagée et de conclusion que la tâche identifiée n'est pas une tâche nécessitant un enveloppeur ou un aiguilleur pour sauvegarder et restaurer un contexte de ressource par rapport à la ou aux premières ressources partagées.

3. Procédé selon la revendication 1, dans lequel l'étape d'identification d'au moins une paire de tâches de la pluralité de tâches qui sont utilisables de façon mutuellement exclusive et de conclusion qu'au moins ladite paire de tâches est utilisable à l'aide dudit code partagé pour sauvegarder et restaurer un contexte de ressource comprend les étapes d'identification d'au moins une paire de tâches de la pluralité de tâches qui sont utilisables de façon mutuellement exclusive par rapport à une ressource partagée et de conclusion qu'au moins ladite paire de tâches est utilisable à l'aide dudit code partagé pour sauvegarder et restaurer un contexte de ressource par rapport à cette ressource partagée.

4. Procédé selon l'une ou l'autre des revendications 1 et 3, dans lequel l'étape d'identification d'au moins ladite paire de tâches de la pluralité de tâches qui sont utilisables de façon mutuellement exclusive, par rapport à une ressource partagée ou autrement, comprend l'étape de détermination des tâches de la pluralité de tâches qui ne s'exécuteront jamais ensemble, ladite détermination utilisant une analyse temporelle ou une analyse d'ordonnançabilité du système d'exploitation.

5. Procédé selon l'une quelconque des revendications 1 à 4, comprenant l'étape de définition d'une unique déclaration de contexte de ressource devant être utilisée par la ou les paires de tâches utilisables de façon mutuellement exclusive.

6. Procédé selon l'une quelconque des revendications précédentes, dans lequel les tâches sont des routines de service d'interruption.

7. Procédé selon l'une quelconque des revendications précédentes, dans lequel les étapes d'identification comprennent les étapes d'attribution d'enveloppeurs ou d'aiguilleurs pour sauvegarder et restaurer un contexte de ressource des contextes de ressources respectifs pour toutes les tâches de la pluralité de tâches, de fusion des contextes redondants et d'élimination des enveloppeurs ou des aiguilleurs redondants pour sauvegarder et restaurer un contexte de ressource des contextes de ressources respectifs.

8. Système comprenant un moyen pour mettre en oeuvre un procédé tel que revendiqué dans l'une quelconque des revendications précédentes.

9. Programme d'ordinateur comprenant un code arrangé, lorsqu'il est exécuté, pour mettre en oeuvre un procédé ou un système tel que revendiqué dans l'une quelconque des revendications précédentes.

10. Mémoire lisible par un ordinateur stockant un programme d'ordinateur tel que revendiqué dans l'une quelconque des revendications précédentes.

11. Dispositif informatique comprenant une mémoire, un processeur et un système d'exploitation qui utilise un ordonnancement préemptif à priorité statique d'une pluralité de tâches ; chaque tâche ayant un contexte de ressource respectif et une priorité d'exécution respective ; le dispositif informatique stockant, et étant adapté pour exécuter, des enveloppeurs ou des aiguilleurs pour sauvegarder et restaurer un contexte de ressource des contextes de ressources respectifs seulement pour les tâches qui sont capables de pré-empter une autre tâche ou code obtenu conformément à un procédé tel que revendiqué dans l'une quelconque des revendications 1 à 7.
